# EUROPEAN PATENT APPLICATION

(11) **EP 3 122 019 A1**
(43) Date of publication of application: **25.01.2017**
(21) Application number: 14892021.8
(22) Date of filing: 12.08.2014
(51) Int. Cl.: H04L 29/08

(54) **CLOUD DESKTOP MIGRATION METHOD AND DEVICE AND DISTRIBUTED CLOUD DESKTOP SYSTEM**

(30) Priority: 13.05.2014 CN 201410201800
(71) Applicant: ZTE Corporation, Shenzhen, Guangdong 518057 (CN)
(72) Inventor: HU, Dan, Shenzhen Guangdong 518057 (CN); SHEN, Song, Shenzhen Guangdong 518057 (CN)
(74) Representative: Regimbeau
(86) International application number: PCT/CN2014/084205
(87) International publication number: WO 2015/172447

(57) **Abstract**

The present disclosure provides a method and an apparatus for cloud desktop migration and a distributed cloud desktop system. The present disclosure relates to the field of communications and solves the problem in the related art that the data transmission speed and quality of virtual desktop data are reduced after a cloud desktop mobile terminal is roamming. The method for cloud desktop migration comprises: acquiring location information of a mobile terminal; acquiring a cloud host server at a current location of the mobile terminal; and migrating cloud desktop resources of the mobile terminal to the cloud host server at the current location. The solutions of the present disclosure enable the mobile terminal to enjoy smooth cloud desktop services even when the mobile terminal is in a roaming state, thereby optimizing the system and improving the user experience.

## Description

### TECHNICAL FIELD

The present disclosure relates to the field of communications, and in particular to a method and an apparatus for cloud desktop migration and a distributed cloud desktop system.

### BACKGROUND

A cloud desktop means that computer hardware resources are virtualized into multiple virtual computers by implementing a virtualization technology on the computer hardware resources, and a desktop operating system without any changes can be run directly on the virtual computers. At the same time, an operating system supporting a para virtualization technology is also provided, and applications can be directly run on the desktop operating system. The cloud desktop system includes a management center, a host server, a storage module and a client.

A cloud desktop mobile terminal refers to a mobile device capable of accessing the cloud desktop system through a wireless network, such as a mobile phone, a notebook, a tablet computer, a Point of Sale (POS machine), etc. Compared with traditional mobile devices, the biggest characteristic of such a device is as follows. The device per se merely includes a simple hardware composition and an operating system as long as the access of the cloud desktop system through a terminal of the cloud desktop system can be satisfied; and all applications are realized by a cloud desktop server, and presented on the mobile terminal through a specific transmission protocol.

A mobile terminal roaming is a concept of telecommunication networks, and originally means that a mobile communication device, after leaving a geographical or administrative area that it belongs to, changes from accessing a switching device at a home location to directly accessing a mobile switching device at a current location, to fast access networks. In general, the cloud desktop mobile terminal is also connected to the cloud server host system at its home location. After the mobile terminal is roaming, since the mobile terminal is away from the cloud host system at its home location, the data transmission speed and quality of the mobile terminal will necessarily decrease sharply. As a result, the effect of using the virtual desktop by the mobile terminal will become worse, or even more that the virtual desktop cannot be used by the mobile terminal.

### SUMMARY

The technical problem to be solved by the present disclosure is to provide a method, an apparatus for allocating resources of a cloud desktop system, and a cloud desktop system, so as to solve the following situation in the related art. In such situation, after the cloud desktop mobile terminal is roaming, the data transmission speed and quality of the virtual desktop are decreased, causing the use effect of the virtual desktop being worse or even the virtual desktop cannot be used by the cloud desktop mobile terminal.

In order to solve the above technical problem, an embodiment of the present disclosure provides a method for cloud desktop migration, including:
acquiring location information of a mobile terminal;
acquiring a cloud host server at a current location of the mobile terminal based on the location information; and
migrating cloud desktop resources of the mobile terminal to the cloud host server at the current location.

Optionally, the step of migrating cloud desktop resources of the mobile terminal to the cloud host server at the current location includes:
determining, based on the location information, whether the mobile terminal has been subjected to a location migration when a cloud desktop system is used by the mobile terminal, so as to obtain a first determination result;
generating a migration instruction that carries information of the cloud host server at the current location when the first determination result is yes;
issuing the migration instruction to a cloud host server at a location of the mobile terminal before the migration; and
emigrating the cloud desktop resources of the mobile terminal by the cloud host server at the location before the migration, and migrating the cloud desktop resources of the mobile terminal to the cloud host server at the current location.

Optionally, the step of determining, based on the location information, whether the mobile terminal has been subjected to a location migration when a cloud desktop system is used by the mobile terminal, so as to obtain a first determination result includes:
determining, based on the location information, whether the cloud host server at the current location of the mobile terminal and the cloud host server at a location before moving are the same cloud host server when the mobile terminal has moved, so as to obtain a second determination result; and
determining, based on the second determination result, whether the mobile terminal has been subjected to a location migration when the cloud desktop system is used by the mobile terminal, so as to obtain the first determination result.

Optionally, situations where the mobile terminal has been subjected to a location migration include the following:
the mobile terminal is moved from a home location to a roaming location;
the mobile terminal is moved from the roaming location to the home location; and
the mobile terminal is moved from a first roaming location to a second roaming location.

Optionally, the step of migrating cloud desktop resources of the mobile terminal to the cloud host server at the current location includes:
determining, based on the location information, whether the mobile terminal is at a roaming location when a cloud desktop system is activated, so as to obtain a third determination result;
generating an activation instruction that carries information of the cloud host server at the current location when the third determination result is yes; and
issuing the activation instruction to the cloud host server at the current location, and emigrating the cloud desktop resources of the mobile terminal to the cloud host server at the current location.

In order to solve the above technical problem, an embodiment of the present disclosure further provides an apparatus for cloud desktop migration, including:
a first acquisition module, configured to acquire location information of a mobile terminal;
a second acquisition module, configured to, based on the location information, acquire a cloud host server at a current location of the mobile terminal; and
a migration module, configured to migrate cloud desktop resources of the mobile terminal to the cloud host server at the current location.

Optionally, the migration module includes:
a first determination module, configured to determine, based on the location information, whether the mobile terminal has been subjected to a location migration when a cloud desktop system is used by the mobile terminal, so as to obtain a first determination result;
a first generation module, configured to generate a migration instruction that carries information of the cloud host server at the current location when the first determination result is yes;
a first issuing module, configured to issue the migration instruction to a cloud host server at a location of the mobile terminal before migration; and
a first migration submodule, configured to emigrate the cloud desktop resources of the mobile terminal by the cloud host server at the location before the migration, and migrate the cloud desktop resources of the mobile terminal to the cloud host server at the current location.

Optionally, the first determination module includes:
a second determination module, configured to determine, based on the location information, whether the cloud host server at the current location of the mobile terminal and the cloud host server at a location before moving are the same cloud host server when the mobile terminal has moved, so as to obtain a second determination result; and
a first determination submodule, configured to determine, based on the second determination result, whether the mobile terminal has been subjected to a location migration when a cloud desktop system is used by the mobile terminal, so as to obtain the first determination result.

Optionally, situations where the mobile terminal has been subjected to a location migration include the following:
the mobile terminal is moved from a home location to a roaming location;
the mobile terminal is moved from the roaming location to the home location; and
the mobile terminal is moved from a first roaming location to a second roaming location.

Optionally, the migration module includes:
a third determination module, configured to determine, based on the location information, whether the mobile terminal is at a roaming location when a cloud desktop system is activated, so as to obtain a third determination result;
a second generation module, configured to generate an activation instruction that carries information of the cloud host server at the current location when the third determination result is yes; and
a second migration submodule, configured to issue the activation instruction to the cloud host server at the current location, and emigrate the cloud desktop resources of the mobile terminal to the cloud host server at the current location.

In order to solve the above technical problem, an embodiment of the present disclosure further provides a distributed cloud desktop system, including: an apparatus for cloud desktop migration as described above.

The beneficial effects of the above technical solutions of the present disclosure are as follows:

The method for cloud desktop migration according to the embodiments of the present disclosure is applied to a distributed cloud desktop system, and the distributed cloud desktop system includes cloud host servers distributed at different locations, wherein, the cloud host servers are configured to provide cloud desktop resources to a mobile terminal. The method for cloud desktop migration acquires location information of the mobile terminal firstly, then acquires a cloud host server at the current location of the mobile terminal based on the location information, and finally migrates the cloud desktop resources of the mobile terminal to the cloud host server at the current location. The mobile terminal is enabled to enjoy smooth cloud desktop services even while being in a roaming state, thereby optimizing the system and improving user experience.

### BRIEF DESCRIPTION OF THE DRAWINGS

FIG. 1 is a flow chart of a method for cloud desktop migration according to an embodiment of the present disclosure;
FIG. 2 is a schematic diagram illustrating a procedure of connecting a mobile terminal to a cloud desktop system in the related art;
FIG. 3 is a schematic diagram illustrating a method for cloud desktop migration and cloud desktop system according to an embodiment of the present disclosure;
FIG. 4 is a first schematic diagram where a method for cloud desktop migration according to an embodiment of the present disclosure is applied to a cloud desktop system;
FIG. 5 is a second schematic diagram where a method for cloud desktop migration according to an embodiment of the present disclosure is applied to a cloud desktop system;
FIG. 6 is a third schematic diagram where a method for cloud desktop migration according to an embodiment of the present disclosure is applied to a cloud desktop system;
FIG. 7 is a structural schematic diagram of an apparatus for cloud desktop migration according to an embodiment of the present disclosure.

### DETAILED DESCRIPTION

In order to make the technical problem to be solved, the technical solutions and the advantage of the present disclosure much more clear, it will be described in detail with reference to the accompanying drawings and the specific embodiments hereinafter.

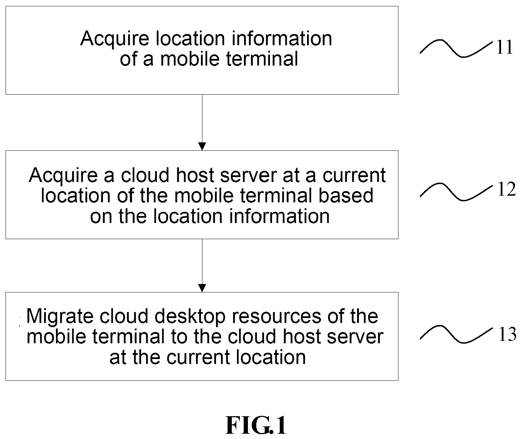

As shown in FIG. 1, the method for cloud desktop migration according to the embodiments of the present disclosure is applied to a distributed cloud desktop system. The distributed cloud desktop system includes cloud host servers distributed at different locations, and the cloud host servers are configured to provide cloud desktop resources to a mobile terminal. The method for cloud desktop migration mainly includes the following steps 11-13.

In step 11, location information of a mobile terminal is acquired.

In step 12, a cloud host server of the mobile terminal at a current location is acquired based on the location information.

In step 13, cloud desktop resources of the mobile terminal are migrated to the cloud host server at the current location.

In the method for cloud desktop migration according to the embodiments of the present disclosure, the location information of the mobile terminal is acquired firstly, then the cloud host server of the mobile terminal at the current location is acquired based on the location information, and the cloud desktop resources of the mobile terminal are migrated to the cloud host server at the current location finally. Therefore, the mobile terminal is enabled to enjoy smooth cloud desktop services even while being in a roaming state, thereby optimizing the system and improving the user experience.

Particularly, the location information of the mobile terminal can be acquired through GPS (Global Position System) information of the mobile terminal or roaming information of the telecommunication network.

In addition, the cloud desktop resources of the mobile terminal include cloud desktop computing resources and storage resources, and the storage resources can be migrated to a storage device which the cloud host server at the current location can access.

In the specific embodiments of the present disclosure, the above step 13 can include the following steps 131-134.

In step 131, it is determined whether the mobile terminal has been subjected to a location migration when a cloud desktop system is used by the mobile terminal based on the location information, so as to obtain a first determination result.

In step 132, a migration instruction that carries information of the cloud host server at the current location is generated when the first determination result is yes.

In step 133, the migration instruction is issued to a cloud host server at a location of the mobile terminal before the migration.

In step 134, the cloud desktop resources of the mobile terminal are emigrated by the cloud host server at the location before the migration, and are migrated to the cloud host server at the current location.

In this way, if the mobile terminal has been subjected to a location migration when the cloud desktop system is used by the mobile terminal, for example, the mobile terminal being migrated from the home location Z to the roaming location A: firstly, a migration instruction which carries the information of the cloud host server at location A is generated; then the migration instruction is issued to the cloud host server at location Z; and then the cloud desktop resources of the mobile terminal are emigrated by the cloud host server at location Z, and immigrated to the cloud host server at location A, so as to provide cloud desktop services for the mobile terminal by the cloud host server at location A. It solves the following problem: after the mobile terminal is roaming when the cloud desktop system is used by the mobile terminal, the use effect of the cloud desktop system becomes worse because the cloud desktop system is limited to a long-distance network transmission. Therefore, the system is optimized and the user experience is improved.

Particularly, the above step 131 can include the following steps 1311-1312.

In step 1311, it is determined, based on the above location information, whether the cloud host server at the current location of the mobile terminal and the cloud host server at a location before moving are the same cloud host server when the mobile terminal has moved, so as to obtain a second determination result.

In step 1312, it is determined, based on the second determination result, whether the mobile terminal has been subjected to a location migration when the cloud desktop system is used by the mobile terminal, so as to obtain the first determination result.

In this way, when the mobile terminal has moved, it can be accurately determined whether the mobile terminal has been subjected to a location migration through a change state of the cloud host server at the location of the mobile terminal. Therefore, the cloud desktop resources are migrated when the mobile terminal is subjected to a location migration, thus avoiding the situation where the cloud desktop system cannot be used when the mobile terminal is roaming, and improving the user experience.

Further, in the above step 1312, in the case that the second determination result is "yes" (that is, the cloud host server at the current location of the mobile terminal and the cloud host server at the location before moving are the same cloud host server), it can be determined that the mobile terminal has not been subjected to a location migration when the cloud desktop system is used by the mobile terminal, and "no" is obtained as the first determination result. In the case that the second determination result is "no", it can be determined that the mobile terminal has been subjected to a location migration when the cloud desktop system is used by the mobile terminal, and "yes" is obtained as the first determination result.

Specifically, situations where the mobile terminal has been subjected to a location migration include the following:
the mobile terminal is moved from a home location to a roaming location;
the mobile terminal is moved from the roaming location to the home location; and
the mobile terminal is moved from a first roaming location to a second roaming location.

In this way, in all the situations where the mobile terminal is moved from the home location to the roaming location, or returned from the roaming location to the home location, or moved from the first roaming location to the second roaming location, the mobile terminal can be ensured to use the cloud host server at the current location, so as to ensure the data transmission rate and quality, and improve the user experience.

In the specific embodiments of the present disclosure, the above step 13 can include the following steps 135-137.

In step 135, it is determined whether the mobile terminal is situated at a roaming location when a cloud desktop system is activated, so as to obtain a third determination result.

In step 136, an activation instruction that carries information of the cloud host server at the current location is generated when the third determination result is "yes".

In step 137, the activation instruction is issued to the cloud host server at the current location, and the cloud desktop resources of the mobile terminal are migrated to the cloud host server at the current location.

In this way, if the cloud desktop system is activated when the mobile terminal is at the roaming location B, an activation instruction which carries the information of the cloud host server at B is firstly generated; then the activation instruction is issued to the cloud host server at B, and the cloud desktop resources of the mobile terminal are migrated to the cloud host server at B. Through the cloud host server at B, a virtual desktop is activated and a cloud client of the mobile terminal is connected. It is enabled the mobile terminal to use the optimized cloud desktop services if the mobile terminal is activated when the cloud desktop system is at the roaming location, thereby optimizing the system and improving the user experience.

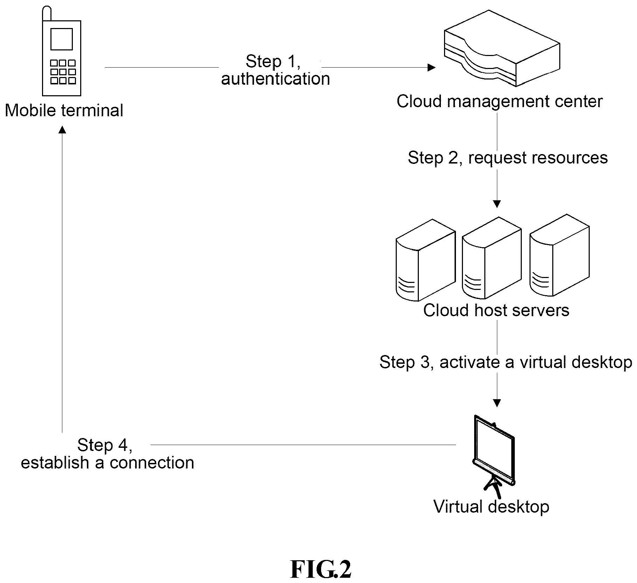

In the related art, the cloud desktop system generally includes a cloud management center, a cloud host server, a storage module and a client. Particularly, as shown in FIG. 2, the steps for accessing the cloud desktop system by the mobile terminal generally include steps 1-4.

In step 1, the mobile terminal requests to connect to the cloud desktop system through a client program, and sends identity information to the cloud management center.

In step 2, the cloud management center performs an authentication, and then requests an appropriate cloud host server based on the identity information of the mobile terminal.

In step 3, the cloud host server activates the virtual desktop, and this step can be skipped if the desktop is in an activated state.

In step 4, after the activation of the virtual desktop is completed, the cloud host server connects with the client of the mobile terminal and transmits the desktop data to the client through a specific protocol via wireless networks. Then, the desktop data is displayed on an output device of the mobile terminal after being parsed by the client.

In actual operation, the fluency of accessing the virtual desktop by the mobile terminal greatly depends on the network condition of a corresponding channel in step 4. After the mobile terminal is roaming, the mobile terminal is away from the cloud host system at its home location, thus this channel will need to pass through multiple wireless network switching equipment and the data transmission speed and quality of the channel must decrease significantly. As a result, the effect of using the virtual desktop by the mobile terminal will become worse, or even the virtual desktop cannot be used.

The method for cloud desktop migration according to the embodiments of the present disclosure is applied to a distributed cloud desktop system. The cloud desktop resources connected to the mobile terminal are re-directed to the cloud desktop system at the current location through the location information for locating the mobile terminal. Therefore, a function that the mobile terminal can enjoy smooth cloud desktop services even while the mobile terminal is in the roaming state is realized, thus optimizing the system and improving the user experience.

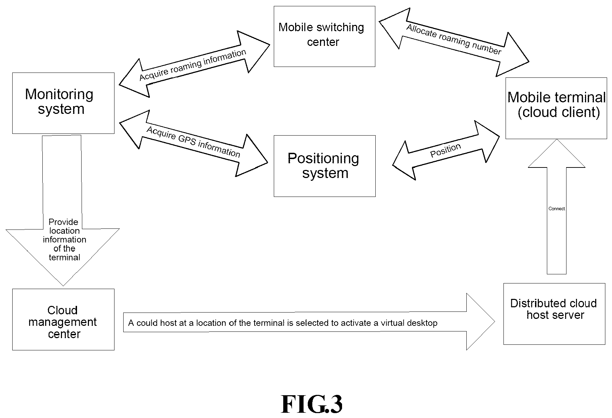

The method for cloud desktop migration according to the embodiments of the present disclosure is applied to the distributed cloud desktop system. As shown in FIG. 3, a monitoring system, through which the location information of the mobile terminal is obtained, is added in the cloud desktop system of the related art. Particularly, the mobile terminal can be positioned by a positioning system to obtain the GPS information; or a roaming information is obtained through a roaming number assigned to the mobile terminal by a mobile switching center. The obtained location information of the mobile terminal is then transmitted to the cloud management center. The cloud host server at the current location of the mobile terminal is selected by the cloud management center, and the mobile terminal is connected after the virtual desktop being activated by the cloud host server.

In the specific embodiments of the present disclosure, the mobile terminal can be a mobile phone, a notebook computer with a wireless network card, a tablet computer and the like.

Assuming that the mobile terminal is a mobile phone, when the mobile terminal has been subjected to a location migration while the cloud desktop system is used by the mobile terminal or when the cloud desktop system is activated by the mobile terminal at the roaming location, the cloud desktop resources of the mobile terminal can be automatically migrated to the cloud desktop host system at the current location by the cloud management center.

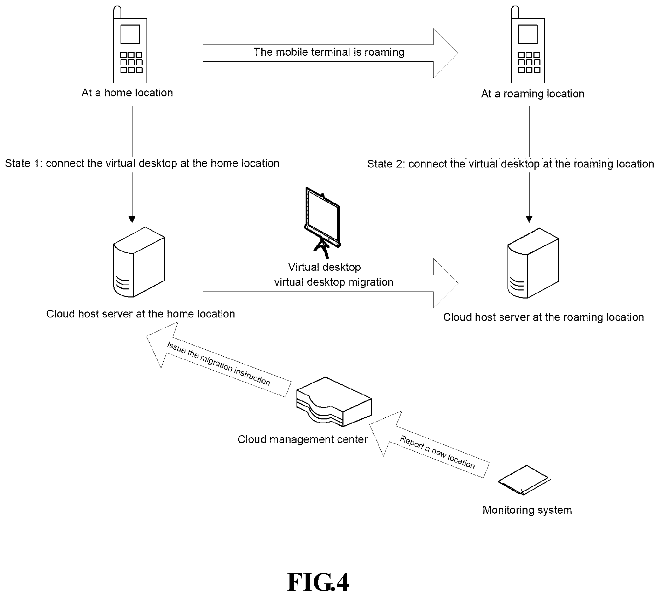

For the first situation, the mobile terminal is moved from the home location to the roaming location. As shown in FIG. 4, the cloud management center obtains the location information of the mobile terminal by the monitoring system, and then issues the migration instruction to the cloud host server at the home location. The virtual desktop is migrated to the cloud host server at the roaming location by the cloud host server at the home location. Thus, the mobile terminal is enabled to transit from state 1 to state 2, where, in state 1, at the home location, it is the cloud host server at the home location that is actually connected through the cloud desktop system, while in state 2, at the roaming location, it is the cloud host server at the roaming location that it is actually connected through the cloud desktop system.

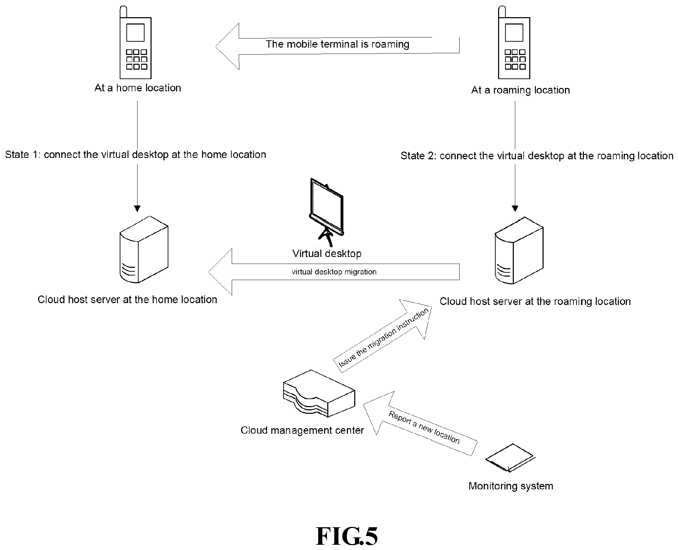

For the second situation, the mobile terminal returns to the home location from the roaming location. As shown in FIG. 5, the cloud management center obtains the location information of the mobile terminal by the monitoring system, and then issues the migration instruction to the cloud host server at the roaming location. The virtual desktop is migrated to the cloud host server at the home location by the cloud host server at the roaming location. Thus, the mobile terminal is enabled to transit from state 2 to state 2, where in state 1, at the home location, it is the cloud host server at the home location that is actually connected through the cloud desktop system, while in state 2, at the roaming location, it is the cloud host server at the roaming location that it is actually connected through the cloud desktop system.

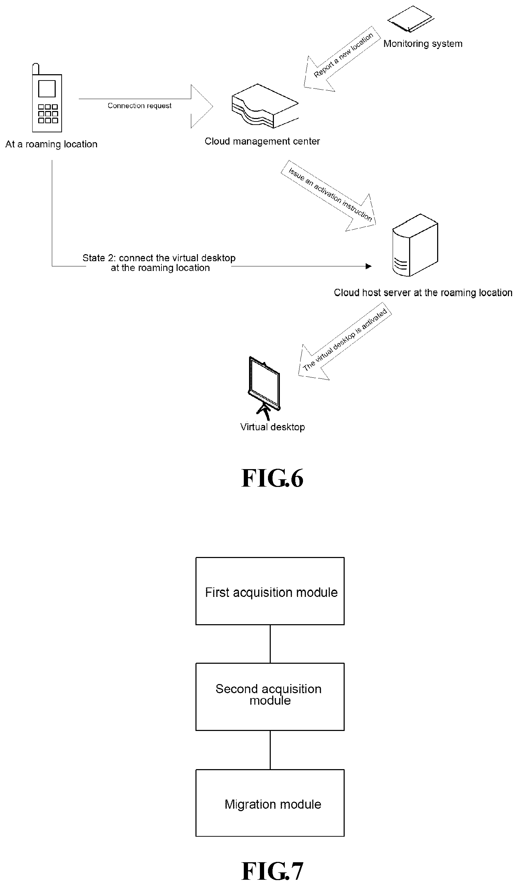

For the third situation, the cloud desktop system is activated when the mobile terminal is at the roaming location. As shown in FIG. 6, the cloud management center obtains the location information of the mobile terminal by the monitoring system, and then issues an activation instruction to the cloud host server at the roaming location after receiving a connection request from the mobile terminal. The cloud host server at the roaming location activates the virtual desktop and connects the cloud client of the mobile terminal.

The method for cloud desktop migration according to the embodiments of the present disclosure is applied to the distributed cloud desktop system. Based on the actual location of the mobile terminal, host resources matched with the location can allocated by the cloud desktop cloud management center, thereby the cloud desktop of the mobile terminal can be localized. The mobile terminal is enabled to enjoy smooth cloud desktop services even while being in a roaming state, thereby optimizing the system and improving the user experience.

As shown in FIG. 5, an embodiment of the present disclosure further provides an apparatus for cloud desktop migration, which is applied to a distributed cloud desktop system. The distributed cloud desktop system includes cloud host servers distributed at different locations, and the cloud host servers are configured to provide cloud desktop resources to the mobile terminal. The apparatus for cloud desktop migration includes:
a first acquisition module, configured to acquire location information of a mobile terminal;
a second acquisition module, configured to acquire a cloud host server at a current location of the mobile terminal based on the location information; and
a migration module, configured to migrate cloud desktop resources of the mobile terminal to the cloud host server at the current location.

The apparatus for cloud desktop migration according to the embodiment of the present disclosure enables the mobile terminal to enjoy smooth cloud desktop services even while the mobile terminal is in a roaming state, thereby optimizing the system and improving the user experience.

In the specific embodiments of the present disclosure, the migration module can include:
a first determination module, configured to determine whether the mobile terminal has been subjected to a location migration when a cloud desktop system is used by the mobile terminal, so as to obtain a first determination result;
a first generation module, configured to generate a migration instruction that carries information of the cloud host server at the current location when the first determination result is yes;
a first issuing module, configured to issue the migration instruction to a cloud host server at a location of the mobile terminal before the migration; and
a first migration submodule, configured to emigrate the cloud desktop resources of the mobile terminal by the cloud host server at the location before the migration, and migrate the cloud desktop resources of the mobile terminal to the cloud host server at the current location.

In this way, the following problem is solved: after the mobile terminal is roaming while the cloud desktop system is used by the mobile terminal, the use effect of the cloud desktop system becomes worse because the cloud desktop system is limited to a long-distance network transmission. Therefore, the system is optimized and the user experience is improved.

Specifically, the first determination module can include:
a second determination module, configured to determine whether the cloud host server at the current location of the mobile terminal and the cloud host server at the location before the migration are servers at the same location, so as to obtain a second determination result; and
a first determination submodule, configured to determine, based on the second determination result, whether the mobile terminal has been subjected to a location migration when the cloud desktop system is used by the mobile terminal, so as to obtain the first determination result.

In this way, when the mobile terminal has moved, it can be accurately determined whether the mobile terminal has been subjected to a location migration through determining whether the cloud host server at the location of the mobile terminal has changed. Therefore, the cloud desktop resources are migrated when the mobile terminal has been subjected to a location migration, thus the situation where the cloud desktop system cannot be used is avoided, and the user experience is improved.

Specifically, the situations where the mobile terminal has been subjected to a location migration include the following:
the mobile terminal is moved from a home location to a roaming location;
the mobile terminal is moved from the roaming location to the home location; and
the mobile terminal is moved from a first roaming location to a second roaming location.

In this way, in all the situations where the mobile terminal is moved from the home location to the roaming location, or returnd from the roaming location to the home location, or moved from the first roaming location to the second roaming location, the mobile terminal can be ensured to use the cloud host server at the current location, so as to ensure the data transmission rate and quality, and improve the user experience.

In the specific embodiments of the present disclosure, the migration module can include:
a third determination module, configured to determine whether the mobile terminal is at a roaming location when the cloud desktop system is activated, so as to obtain a third determination result;
a second generation module, configured to generate an activation instruction that carries information of the cloud host server at the current location when the third determination result is yes; and
a second migration submodule, configured to issue the activation instruction to the cloud host server at the current location, and emigrate the cloud desktop resources of the mobile terminal to the cloud host server at the current location.

In this way, the mobile terminal is enabled to use optimized cloud desktop services when the cloud desktop system is activated while the mobile terminal is at the roaming location. Thus, the user experience is improved.

The apparatus for cloud desktop migration according to the embodiments of the present disclosure enables the mobile terminal to enjoy smooth cloud desktop services even while the mobile terminal is in a roaming state, thereby optimizing the system and improving the user experience.

It should be noted that, the apparatus for cloud desktop migration is an apparatus corresponding to the above method for cloud desktop migration, wherein, all implementation modes in the above method embodiments are suitable for the embodiments of the apparatus, and the same technical effect can be achieved.

Since the apparatus for cloud desktop migration of the embodiments of the present disclosure is applied to a distributed cloud desktop system, the embodiments of the present disclosure further provide a distributed cloud desktop system. The distributed cloud desktop system includes cloud host servers distributed at different locations, configured to provide the cloud desktop resources to a mobile terminal. The distributed cloud desktop system further includes the apparatus for cloud desktop migration described in the above embodiments. Particularly, all implementation examples of the above apparatus for cloud desktop migration are suitable for the embodiment of the distributed cloud desktop system, and the same technical effect can be achieved.

The above description is the preferable embodiments of the present disclosure. It should be noted, for those ordinary skilled in the art, a plurality of modifications and retouches can also be made without departing from the described principles of the present disclosure, and all the modifications and retouches should be deemed as falling into the scope of the present disclosure.

### INDUSTRIAL APPLICABILITY

In the embodiments of the present disclosure, the distributed cloud desktop system includes cloud host servers distributed at different locations, wherein, the cloud host servers are configured to provide cloud desktop resources to the mobile terminal. In the method for cloud desktop migration, the location information of the mobile terminal is acquired firstly, and then a cloud host server at the current location of the mobile terminal is acquired based on the location information, and then the cloud desktop resources of the mobile terminal are migrated to the cloud host server at the current location. The mobile terminal is enabled to enjoy smooth cloud desktop services even while the mobile terminal is in a roaming state, thereby optimizing the system and improving the user experience. It has the industrial applicability.

## Claims

1. A method for cloud desktop migration, comprising:
acquiring location information of a mobile terminal;
acquiring a cloud host server at a current location of the mobile terminal based on the location information; and
migrating cloud desktop resources of the mobile terminal to the cloud host server at the current location.

2. The method according to claim 1, wherein, the step of migrating cloud desktop resources of the mobile terminal to the cloud host server at the current location comprises:
determining, based on the location information, whether the mobile terminal has been subjected to a location migration when a cloud desktop system is used by the mobile terminal, so as to obtain a first determination result;
generating a migration instruction that carries information of the cloud host server at the current location when the first determination result is yes;
issuing the migration instruction to a cloud host server at a location of the mobile terminal before the migration; and
emigrating the cloud desktop resources of the mobile terminal by the cloud host server at the location before the migration, and migrating the cloud desktop resources of the mobile terminal to the cloud host server at the current location.

3. The method according to claim 2, wherein, the step of determining, based on the location information, whether the mobile terminal has been subjected to a location migration when a cloud desktop system is used by the mobile terminal, so as to obtain a first determination result comprises:
determining, based on the location information, whether the cloud host server at the current location of the mobile terminal and the cloud host server at a location before moving are the same cloud host server when the mobile terminal has moved, so as to obtain a second determination result; and
determining, based on the second determination result, whether the mobile terminal has been subjected to a location migration when the cloud desktop system is used by the mobile terminal, so as to obtain the first determination result.

4. The method according to claim 2, wherein, situations where the mobile terminal has been subjected to a location migration comprise:
the mobile terminal is moved from a home location to a roaming location;
the mobile terminal is moved from the roaming location to the home location; and
the mobile terminal is moved from a first roaming location to a second roaming location.

5. The method according to claim 1, wherein, the step of migrating cloud desktop resources of the mobile terminal to the cloud host server at the current location comprises:
determining, based on the location information, whether the mobile terminal is at a roaming location when a cloud desktop system is activated, so as to obtain a third determination result;
generating an activation instruction that carries information of the cloud host server at the current location when the third determination result is yes; and
issuing the activation instruction to the cloud host server at the current location, and emigrating the cloud desktop resources of the mobile terminal to the cloud host server at the current location.

6. An apparatus for cloud desktop migration, comprising:
a first acquisition module, configured to acquire location information of a mobile terminal;
a second acquisition module, configured to acquire a cloud host server at a current location of the mobile terminal, based on the location information; and
a migration module, configured to migrate cloud desktop resources of the mobile terminal to the cloud host server at the current location.

7. The apparatus according to claim 6, wherein, the migration module comprises:
a first determination module, configured to determine, based on the location information, whether the mobile terminal has been subjected to a location migration when a cloud desktop system is used by the mobile terminal, so as to obtain a first determination result;
a first generation module, configured to generate a migration instruction that carries information of the cloud host server at the current location when the first determination result is yes;
a first issuing module, configured to issue the migration instruction to a cloud host server at a location of the mobile terminal before the migration; and
a first migration submodule, configured to emigrate the cloud desktop resources of the mobile terminal by the cloud host server at the location before the migration, and migrate the cloud desktop resources of the mobile terminal to the cloud host server at the current location.

8. The apparatus according to claim 7, wherein, the first determination module comprises:
a second determination module, configured to, based on the location information, determine whether the cloud host server at the current location of the mobile terminal and the cloud host server at a location before moving are the same cloud host server when the mobile terminal has moved, so as to obtain a second determination result; and
a first determination submodule, configured to determine, based on the second determination result, whether the mobile terminal has been subjected to a location migration when a cloud desktop system is used by the mobile terminal, so as to obtain the first determination result.

9. The apparatus according to claim 7, wherein, situations where the mobile terminal has been subjected to a location migration comprise:
the mobile terminal is moved from a home location to a roaming location;
the mobile terminal is moved from the roaming location to the home location; and
the mobile terminal is moved from a first roaming location to a second roaming location.

10. The apparatus according to claim 6, wherein, the migration module comprises:
a third determination module, configured to determine, based on the location information, whether the mobile terminal is at a roaming location when a cloud desktop system is activated, so as to obtain a third determination result;
a second generation module, configured to generate an activation instruction that carries information of the cloud host server at the current location when the third determination result is yes; and
a second migration submodule, configured to issue the activation instruction to the cloud host server at the current location, and emigrate the cloud desktop resources of the mobile terminal to the cloud host server at the current location.

11. A distributed cloud desktop system comprises the apparatus for cloud desktop migration according to any one of claims 6-10.
